# EUROPEAN PATENT APPLICATION

(11) **EP 1 324 418 A1**
(43) Date of publication of application: **02.07.2003**
(21) Application number: 02028080.6
(22) Date of filing: 17.12.2002
(51) Int. Cl.: H01M 10/40

(54) **High energy density rechargeable cell for medical device applications**

(30) Priority: 17.12.2001 US 341552 P
(71) Applicant: Wilson Greatbatch Technologies, Inc., Clarence, New York 14031-2033 (US)
(72) Inventor: Takeuchi, Esther S., East Amherst, New York 14051 (US); Leising, Randolph, Williamsville, New York 14221 (US)
(74) Representative: Koepe, Gerd L., Dipl.-Chem.

(57) **Abstract**

A re-balanced lithium ion secondary cell, particularly one comprising LiCoO₂ cathode active material, is described. The preferred anode material is carbonaceous, and the couple is balanced to a ratio of the cathode active material to the anode material of from about 1.35 to about 2.25. This significantly improves the energy density of the secondary cell over that known by the prior art by increasing the charge voltage to at least 4.4V.

## Description

### CROSS REFERENCE TO RELATED APPLICATION

This application claims priority based on provisional application Serial No. 60/341,552, filed December 17, 2001.

### BACKGROUND OF THE INVENTION

### 1. Field of the Invention

This invention relates to the conversion of chemical energy to electrical energy. In particular, the present invention relates to a secondary electrochemical cell having sufficiently high energy density and reliability to serve as the power source for an implantable medical device. A preferred secondary chemistry is of a carbonaceous anode material and a lithiated cathode active material, such as lithium cobalt oxide (LiCoO₂).

### 2. Prior Art

Implantable medical devices require power sources with high energy density so that their size can be small while providing enough energy to power the device for several years. Rechargeable power sources, such as lithium ion cells, meet these basic requirements, but need further improvement in energy density to reduce their size for future generations of implantable applications. A fundamental limitation of lithium ion cells is the energy density of their electrode active materials, such as the preferred lithium cobalt oxide. As stated in: T. Ohzuku, *Lithium Batteries: New Materials, Developments and Perspectives,* G. Pistoia, Ed., Elsevier, 1994, pg. 239-280, it is universally believed that reversible cycling of LiCoO₂ occurs when the capacity of the material is limited to <125 mAh/g. This is about 46% of the total theoretical capacity of LiCoO₂.

### SUMMARY OF INVENTION

The object of the present invention is to re-balance the ratio of lithiated cathode active material to carbonaceous anode material to provide a high energy density secondary electrochemical cell as a power source for implantable medical devices that operate under a relatively low current drain. Exemplary devices operating at this discharge level are pacemakers and implantable hearing assist devices. The preferred secondary cell utilizes a LiCoO₂ cathode and an anode material that reversibly incorporate lithium. The re-balanced cell provides significantly more energy density over a prior art cell of a similar chemistry by increasing the charge voltage to at least 4.4 V, and preferably 4.6 V. The significant increase in energy density over that known by the prior art gives a smaller, lighter power source for implantable medical device applications without compromising safety.

These and other aspects of the present invention will become more apparent to those skilled in the art by reference to the following description and to the appended drawings.

### BRIEF DESCRIPTION OF THE DRAWINGS

Fig. 1 is a graph of cell capacity versus voltage for a lithium ion cell charged to 4.2 V, 4.4 V and 4.6 V.
Fig. 2 is a graph of the comparative cycling efficiency of a lithium ion cell balanced according to the present invention in relation to the prior art.

### DETAILED DESCRIPTION OF THE PREFERRED EMBODIMENTS

As used herein, the term "C-rate" means the current required to either fully charge or discharge a cell in one hour. For example, a rate of 2C means that the cell is fully charged or discharged in one-half hour while a rate of C/2 means that it takes two hours to fully charge or discharge the cell.

The electrochemical cell of the present invention is of a secondary, rechargeable chemistry. The cell comprises an anode active metal selected from Groups IA, IIA and IIIB of the Periodic Table of the Elements, including lithium, sodium, potassium, etc.

In conventional secondary electrochemical systems, the anode or negative electrode comprises an anode material capable of intercalating and de-intercalating the anode active material, such as the preferred alkali metal lithium. Typically, the anode material of the negative electrode comprises any of the various forms of carbon (e.g., coke, graphite, acetylene black, carbon black, glassy carbon, etc.) that are capable of reversibly retaining the lithium species. Graphite is particularly preferred in conventional secondary cells. "Hairy carbon" is another particularly preferred conventional material due to its relatively high lithium-retention capacity. "Hairy carbon" is a material described in U.S. Patent No. 5,443,928 to Takeuchi et al., which is assigned to the assignee of the present invention and incorporated herein by reference.

Regardless of the carbonaceous nature or makeup of the anode material, fibers are particularly advantageous. Fibers have excellent mechanical properties that permit them to be fabricated into rigid electrode structures capable of withstanding degradation during repeated charge/discharge cycling. Moreover, the high surface area of carbon fibers allows for rapid charge/discharge rates.

The negative electrode for a secondary cell is fabricated by mixing about 90 to 97 weight percent of the carbonaceous anode material with about 3 to 10 weight percent of a binder material, which is preferably a fluoro-resin powder such as polytetrafluoroethylene (PTFE), polyvinylidene fluoride (PVDF), polyethylenetetrafluoroethylene (ETFE), polyamides, polyimides, and mixtures thereof. This negative electrode admixture is provided on a current collector selected from copper, stainless steel, titanium, tantalum, platinum, gold, aluminum, nickel, cobalt nickel alloy, highly alloyed ferritic stainless steel containing molybdenum and chromium, and nickel-, chromium-, and molybdenum-containing alloys. The current collector is a foil or screen and contact is by casting, pressing, or rolling the admixture thereto.

The cathode of a secondary cell preferably comprises a lithiated material that is stable in air and readily handled. Examples of such air-stable lithiated cathode materials include oxides, sulfides, selenides, and tellurides of such metals as vanadium, titanium, chromium, copper, molybdenum, niobium, iron, nickel, cobalt and manganese. The more preferred oxides include LiNiO₂, LiMn₂O₄, LiCoO₂, LiCo_{0.92}Sn_{0.08}O₂ and LiCo₁₋ₓNiₓO₂.

As is the case with the above described carbonaceous anode materials, the cathode materials are formed into an electrode body for incorporation into an electrochemical cell by mixing one or more of them with one of the above described binder materials. Further, up to about 10 weight percent of a conductive diluent is preferably added to the mixture to improve conductivity. Suitable materials for this purpose include acetylene black, carbon black and/or graphite or a metallic powder such as powdered nickel, aluminum, titanium and stainless steel. The preferred cathode material mixture thus includes a powdered fluoro-polymer binder present at about 1 to 5 weight percent, a conductive diluent present at about 1 to 5 weight percent and about 90 to 98 weight percent of the cathode active material.

To charge such secondary cells, the lithium ions comprising the positive electrode are intercalated into the anode material by applying an externally generated electrical potential to the cell. The applied recharging potential draws the lithium ions from the cathode active material, through the electrolyte and into the anode material to saturate it. In the case of a carbonaceous anode material, the resulting LiₓC₆ material has an x ranging from about 0.1 to about 1.0. The cell is then provided with an electrical potential and discharged in a normal manner.

Positive electrodes are prepared by rolling, spreading or pressing the cathode active formulations onto a suitable current collector of any one of the previously described materials suitable for the negative electrode. The preferred cathode electrode current collector material is a perforated aluminum foil or screen, such as an expanded aluminum screen.

In order to prevent internal short circuit conditions, the negative electrode is separated from the positive electrode by a suitable separator material. The separator is of electrically insulative material, and the separator material also is chemically unreactive with the anode and cathode active materials and both chemically unreactive with and insoluble in the electrolyte. In addition, the separator material has a degree of porosity sufficient to allow flow there through of the electrolyte during the electrochemical reaction of the cell. Illustrative separator materials include fabrics woven from fluoropolymeric fibers including polyvinylidine fluoride, polyethylenetetrafluoroethylene, and polyethylenechlorotrifluoroethylene used either alone or laminated with a fluoropolymeric microporous film, non-woven glass, polypropylene, polyethylene, glass fiber materials, ceramics, a polytetrafluoroethylene membrane commercially available under the designation ZITEX (Chemplast Inc.), a polypropylene membrane commercially available under the designation CELGARD (Celanese Plastic Company, Inc.) and a membrane commercially available under the designation DEXIGLAS (C.H. Dexter, Div., Dexter Corp.).

The electrochemical cell further includes a nonaqueous, ionically conductive electrolyte that serves as a medium for migration of ions between the negative and positive electrodes during electrochemical reactions of the cell. A suitable electrolyte has an inorganic, ionically conductive salt dissolved in a nonaqueous solvent, and more preferably, an ionizable alkali metal salt dissolved in a mixture of aprotic organic solvents comprising a low viscosity solvent and a high permittivity solvent. Preferably, the ion forming alkali metal salt is similar to the alkali metal comprising the anode active material. In the case of lithium, known salts include LiPF₆, LiBF₄, LiAsF₆, LiSbF₆, LiClO₄, LiO₂, LiAlCl₄, LiGaCl₄, LiC(SO₂CF₃)₃, LiN(SO₂CF₃)₂, LiSCN, LiO₃SCF₃, LiC₆F₅SO₃, LiO₂CCF₃, LiSO₆F, LiB(C₆H₅)₄, LiCF₃SO₃, and mixtures thereof.

Low viscosity solvents useful with the present invention include esters, linear and cyclic ethers and dialkyl carbonates such as tetrahydrofuran (THF), methyl acetate (MA), diglyme, trigylme, tetragylme, dimethyl carbonate (DMC), 1,2-dimethoxyethane (DME), 1,2-diethoxyethane (DEE), 1-ethoxy,2-methoxyethane (EME), ethyl methyl carbonate (EMC), methyl propyl carbonate, ethyl propyl carbonate, diethyl carbonate (DEC), dipropyl carbonate, and mixtures thereof. High permittivity solvents include cyclic carbonates, cyclic esters and cyclic amides such as propylene carbonate (PC), ethylene carbonate (EC), butylene carbonate, acetonitrile, dimethyl sulfoxide, dimethyl formamide, dimethyl acetamide, γ-valerolactone, Y-butyrolactone (GBL), N-methyl-pyrrolidinone (NMP), and mixtures thereof.

A preferred electrolyte for a secondary cell comprises a solvent mixture of EC:DMC:EMC:DEC. Most preferred volume percent ranges for the various carbonate solvents include EC in the range of about 10% to about 50%; DMC in the range of about 5% to about 75%; EMC in the range of about 5% to about 50%; and DEC in the range of about 3% to about 45%. In a preferred form of the present invention, the electrolyte activating the cell is at an equilibrated molar mixture with respect to the ratio of DMC:EMC:DEC. This is important to maintain consistent and reliable cycling characteristics. It is known that due to the presence of low-potential (anode) materials in a charged cell, an un-equilibrated mixture of DMC:DEC in the presence of lithiated graphite (LiC₅-0.01 V vs Li/Li⁺) results in a substantial amount of EMC being formed. When the concentrations of DMC, DEC and EMC change, the cycling characteristics and temperature rating of the cell change. Such unpredictability is unacceptable. This phenomenon is described in detail in U.S. patent application Serial No. 10/232,166, filed August 30, 2002, which is assigned to the assignee of the present invention and incorporated herein by reference. Electrolytes containing the quaternary carbonate mixture of the present invention exhibit freezing points below -50°C, and lithium ion secondary cells activated with such mixtures have very good cycling behavior at room temperature as well as very good discharge and charge/discharge cycling behavior at temperatures below -40°C.

The assembly of the secondary cells is in the form of one or more cathode plates operatively associated with one or more plates of a negative electrode. Alternatively, the negative electrode and positive electrode, both in strip form, are provided with an intermediate separator and wound together in a "jellyroll" type configuration or "wound element cell stack" such that the negative electrode is on the outside of the roll to make electrical contact with the cell case in a case-negative configuration. Using suitable top and bottom insulators, the wound cell stack is inserted into a metallic case of a suitable size dimension. The metallic case may comprise materials such as stainless steel, mild steel, nickel-plated mild steel, titanium, tantalum or aluminum, but not limited thereto, so long as the metallic material is compatible for use with the other cell components.

The cell header comprises a metallic disc-shaped body with a first hole to accommodate a glass-to-metal seal/terminal pin feedthrough and a second hole for electrolyte filling. The glass used is of a corrosion resistant type having up to about 50% by weight silicon such as CABAL 12, TA 23, FUSITE 425 or FUSITE 435. The positive terminal pin feedthrough preferably comprises titanium although molybdenum, aluminum, nickel alloy, or stainless steel can also be used. The cell header is typically of a material similar to that of the case. The positive terminal pin supported in the glass-to-metal seal is, in turn, supported by the header, which is welded to the case containing the electrode stack. The cell is thereafter filled with the electrolyte solution described hereinabove and hermetically sealed such as by close-welding a stainless steel ball over the fill hole, but not limited thereto.

The above assembly describes a case-negative cell dischargeable to deliver a current of from about 100 milliamperes corresponding to a C-rate of about C/2,300,0000 to a current of about 4 amps corresponding to a C-rate of about C/0.575. While a case-negative design is preferred, it is well known to those skilled in the art, the present secondary electrochemical systems can also be constructed in case-positive configuration.

The following examples describe the manner and process of the present invention, and they set forth the best mode contemplated by the inventors of carrying out the invention, but they are not to be construed as limiting.

### EXAMPLE I

### High Reversible Capacity of LiCoO₂ Under Low Current Drain

Lithium cobalt oxide (LiCoO₂) cathode active material was tested versus a lithium anode to determine the reversible capacity of the system under low current drain conditions. Cathodes were fabricated using LiCoO₂ and graphite as a conductive additive mixed with poly(vinylidene flouride) binder (PVDF) dissolved in dimethylformamide solvent (DMF) to form a slurry. The slurry was spread on an aluminum foil substrate, dried, pressed and cut into a disk. An anode electrode was punched from lithium metal and assembled into a coin cell along with the cathode electrode. A layer of polyethylene sheet material separated the electrodes from each other. The separator was wetted with an electrolyte of 1M LiPF₆ EC/DMC (3:7) and the cell was crimped closed. Three cells were constructed in this manner. The cells were tested to different charge voltages, with the results presented in Table 1.

**Table 1**

| Li/LiCoO₂ Coin Cell Testing at C/5 Rate | | | |
|---|---|---|---|
| Cell | Charge Voltage Limit | Cathode Capacity | |
| | | Cycle 1 | Cycle 3 |
| 1 | 4.2 V | 139.6 mAh/g | 139.2 mAh/g |
| 2 | 4.4 V | 171.1 mAh/g | 170.0 mAh/g |
| 3 | 4.6 V | 220.6 mAh/g | 214.2 mAh/g |

As can be seen in Table 1, increasing the charge voltage for the cathode resulted in increased delivered capacity, exceeding the prior art 125-mAh/g limit. Moreover, these cells also showed good reversibility in cathode capacity, due to the slow rate charge and discharge (C/5) used in this study. In particular, for cells charged to +4.6 V the LiCoO₂ cathode provided 80% of its theoretical capacity. Charging the cells to a voltage higher than 4.6 V at this rate resulted in increased capacity fade.

### EXAMPLE II

### Very Low Current Drain

Two Li/LiCoO₂ coin cells were constructed in a similar manner as described in Example I. The cells were tested at very low current rates (C/50), which is consistent with the discharge rate needed for certain medical device applications, such as a cardiac pacemaker in a device monitoring mode and an implantable hearing assist device. The results of this testing are listed in Table 2.

**Table 2**

| Li/LiCcO₂ Coin Cell Testing at C/50 Rate | | |
|---|---|---|
| Cell | Charge Voltage | Cathode Discharge Capacity |
| 4 | 4.55 V | 219.2 mAh/g |
| 5 | 4.54 V | 219.3 mAh/g |
| 4 | 4.60 V | 251.1 mAh/g |
| 5 | 4.60 V | 240.8 mAh/g |

The results shown in Table 2 indicate that the amount of capacity fade was decreased relative to that found at C/5 in example I. In addition, the charge voltage needed to reach 80% of theoretical cathode capacity was found to decrease by 50 mV in this test. When the test cells were fully charged to 4.6 V, the cells delivered on average 90% of their total theoretical capacity. Thus, at low charge and discharge rates the amount of delivered capacity increases and the voltage needed to reach a certain capacity decreases.

### EXAMPLE III

### Cell Balance of Present Invention

In order to utilize the increased capacity of LiCoO₂ in a lithium ion cell for low rate applications, the cell balance, or the gram amount of cathode active material relative to the gram amount anode material, must be set to a proper ratio. A cell design based on the prior art usage of LiCoO₂ in conjunction with a graphite anode typically requires a cell balance of about 2.3 (grams active cathode material/grams active anode material). According to the present invention, the appropriate cell balance is from about 1.7 to about 1.1, and preferably about 1.4. Thus, more anode material is required in the cell to store the additional lithium being supplied by the cathode. Without the additional anode material, reactive lithium metal would be deposited at the anode electrode during charging, creating an unsafe condition.

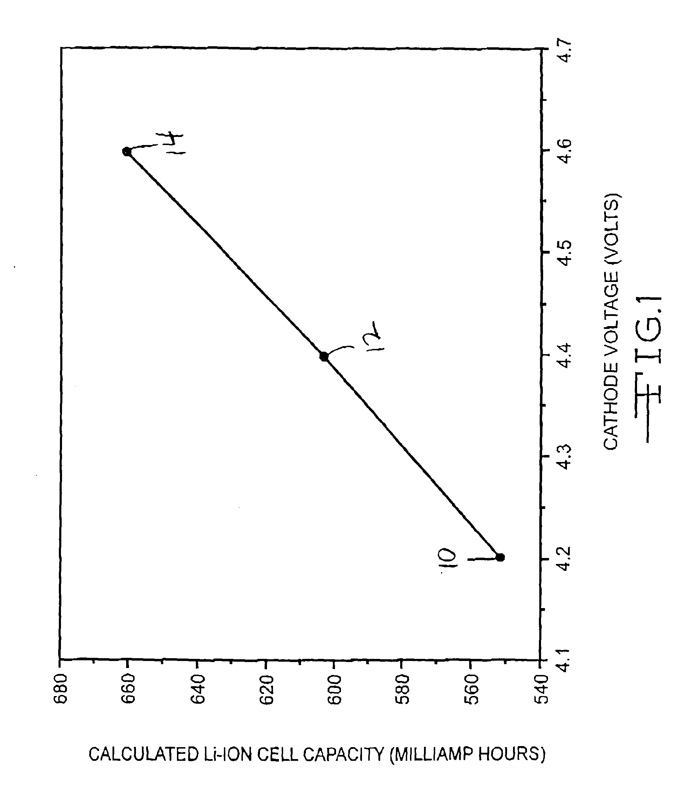

In that respect, a coin cell was constructed in a similar manner as described in Example I except that the anode material was graphite. The amount of increase in cell capacity to various charged voltages was calculated from the experimental cathode data and the required cell balance values, and is plotted in Fig. 1. As illustrated by the point labeled 10 on the curve in this figure, the cell capacity of a prior art graphite/LiCoO₂ couple having a cell balance of about 2.3 is about 552 mAh. Charging the same cell to a cathode voltage of +4.4 V vs Li/Li+ at a rate of about C/5 increases the cell capacity from 552 mAh to 603 mAh (point 12), a 9% increase in capacity. Furthermore, charging the same cell to a cathode voltage of +4.6 vs Li/Li+ at a rate of about C/5 increases the cell capacity to 661 mAh (point 14), a 20% increase in capacity over the capacity at 4.2 V.

An important aspect of the present invention is that while raising the charge voltage of the cell increases the cathode capacity, the cell balance must also be adjusted by providing the appropriate amount of anode material to fully accept or intercalate the amount of lithium provided by the cathode active material during a full charge, as specified by the designated charge voltage limit for the cell. This provides a safe lithium ion cell.

According to the present invention, for a secondary cell comprising a graphite anode electrode and a lithium cobalt oxide cathode electrode, the ratio of the cathode active material to the anode material is from about 1.35 to about 2.25. It should be pointed out, however, that if one of the other carbonaceous anode materials discussed above (with a different inherent lithium intercalation capacity) is coupled to a lithiated cathode active material, the cell balance will need to be adjusted accordingly. This includes lithium cobalt oxide and the other lithiated cathode active materials discussed above.

A most preferred couple according to the present invention includes lithium cobalt oxide coupled to a carbonaceous anode material. This couple is balanced such that the anode material accepts a sufficient amount of lithium based on the capacity of LiCoO₂ of from about 165 mAh/gram to about 225 mAh/gram at a charge/discharge rate of about C/5. A similar couple subjected to a charge/discharge rate of about C/50 has a cathode capacity of about 165 mAh/gram to about 245 mAh/gram.

### EXAMPLE IV

### Cell Balance And Capacity Fade

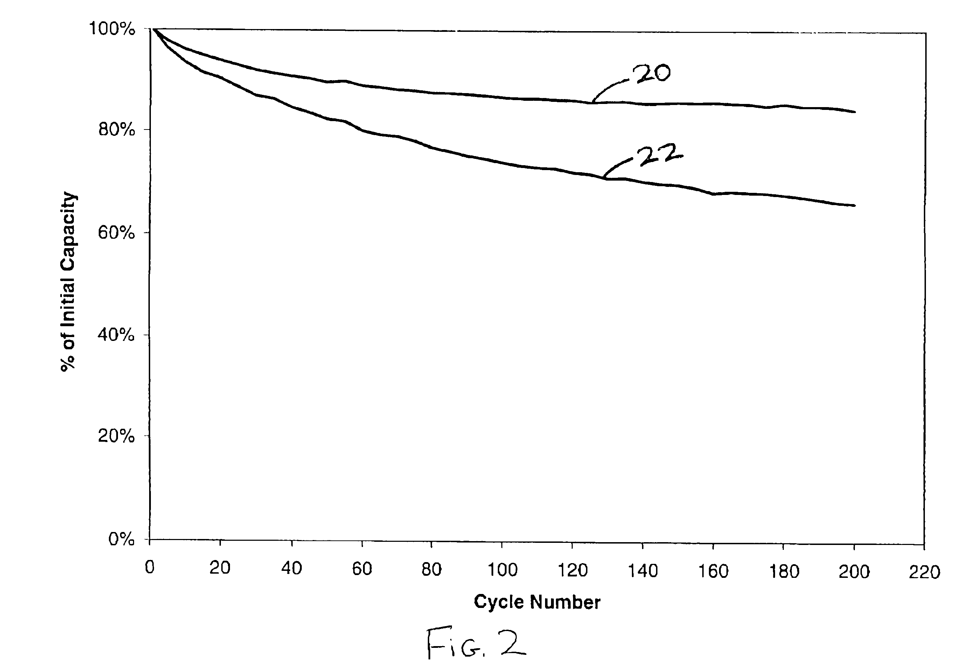

The importance of using the correct electrode material balance in a lithium ion cell is illustrated by this example. A lithium ion secondary coin cell was assembled in a similar manner as described in Example III. The reversible capacity for the graphite anode material was experimentally found to be about 340 mAh/g, with an additional 35 mAh/g of irreversible capacity during the first cycle. The reversible capacity of the LiCoO₂ cathode was determined to be about 135 mAh/g. The cell was balanced such that the capacity of the lithium delivered by the cathode electrode would not exceed the reversible capacity of the anode material during charging of the cell. This cell was then charged and discharged at room temperature under a constant current using a C/2 rate. The results of this cycling were used to construct curve 20 in Fig. 2.

A second coin cell was constructed using similar materials, but with about 14% extra cathode capacity. This over-balanced cell was also cycle tested at a C/2 rate. After 200 cycles, the second cell with extra cathode capacity displayed 15% more fade than the correctly balanced cell. This is shown by curve 22 in Fig. 2. In that respect, the comparative results of these two cells and the cycling results illustrated in Fig. 2 show that an over-balanced cell would cause an increase in capacity fade on extended cycling.

It is appreciated that various modifications to the inventive concepts described herein may be apparent to those of ordinary skill in the art without departing from the spirit and scope of the present invention as defined by the appended claims.

## Claims

1. An electrochemical cell, which comprises
(a) a negative electrode comprising an anode material capable of intercalating and de-intercalating an alkali metal;
(b) a positive electrode comprising a cathode active material capable of intercalating and de-intercalating the alkali metal; and
(c) an electrolyte activating the negative electrode and the positive electrode, wherein the ratio of the cathode active material to the anode material is from 1.35 to 2.25.

2. The electrochemical cell of claim 1, wherein the anode material is selected from the group consisting of coke, graphite, acetylene black, carbon black, glassy carbon, hairy carbon and mixtures thereof.

3. The electrochemical cell of claim 1 or claim 2, wherein the cathode active material is selected from the group consisting of oxides, sulfides, selenides and tellurides of vanadium, titanium, chromium, copper, molybdenum, niobium, iron, nickel, cobalt, manganese and mixtures thereof, preferably wherein the cathode active material is selected from the group consisting of LiNiO₂, LiMn₂O₄, LiCoO₂, LiCo_{0,92}Sn_{0,08}O₂, LiCo₁₋ₓNiₓO₂ and mixtures thereof.

4. An electrochemical cell, which comprises
(a) a negative electrode comprising a carbonaceous material capable of intercalating and de-intercalating lithium;
(b) a positive electrode comprising a lithiated cathode active material capable of intercalating and de-intercalating lithium; and
(c) an electrolyte activating the negative electrode and the positive electrode, wherein the ratio of the cathode active material to the anode material is from 1.35 to 2.25.

5. The electrochemical cell of claim 4, wherein the cathode active material is lithium cobalt oxide.

6. The electrochemical cell of claim 4 or claim 5, wherein the cell is capable of being charged to at least 4.4 V (volts).

7. The electrochemical cell of any of claims 4 to 6, wherein the electrolyte comprises at least one first solvent selected from an ester, a linear ether and a cyclic ether, and at least one second solvent selected from a cyclic carbonate, a cyclic ester and a cyclic amide, preferably wherein the electrolyte includes a lithium salt.

8. The electrochemical cell of any of claims 1 to 7, contained within an implantable medical device.

9. An electrochemical cell, which comprises
(a) a negative electrode comprising a carbonaceous material capable of intercalating and de-intercalating lithium;
(b) a positive electrode comprising lithium cobalt oxide; and
(c) an electrolyte activating the negative electrode and the positive electrode, wherein the ratio of the cathode active material to the anode material provided a cathode capacity of from 165 mAh/g to 225 mAh/g at a rate of C/5, or wherein the ratio of the cathode active material to the anode material provided a cathode capacity of from 165 mAh/g to 245 mAh/g at a rate of C/50.

10. An implantable medical device comprising an electrochemical cell which is capable of powering the device, wherein the cell comprises:
(a) a negative electrode comprising a carbonaceous material capable of intercalating and de-intercalating lithium;
(b) a positive electrode comprising a lithiated cathode active material capable of intercalating and de-intercalating lithium; and
(c) an electrolyte activating the negative electrode and the positive electrode, wherein the ratio of the cathode active material to the anode material is from 1.35 to 2.25.

11. The implantable medical device of claim 10, wherein the lithiated cathode active material of the cell is selected from the group consisting of LiNiO₂, LiMn₂O₄, LiCoO₂, LiCo_{0,92}Sn_{0,08}O₂, LiCo₁₋ₓNiₓO₂ and mixtures thereof.

12. The implantable medical device of claim 10 or claim 11, wherein the cell is capable of being charged to at least 4.4 V (volts), and/or wherein the cell is dischargeable to deliver a current of from 100 mA (milliamperes) to 4 A (amps).

13. A method for providing electrical energy, comprising the steps of
(a) providing an electrochemical cell comprising the steps of:
(i) providing a negative electrode comprising a carbonaceous material capable of intercalating and de-intercalating lithium;
(ii) providing a positive electrode comprising a lithiated cathode active material capable of intercalating and de-intercalating lithium;
(iii) housing the negative electrode and the positive electrode in a casing; and
(iv) activating the negative electrode and the positive electrode with an electrolyte;
(b) connecting the cell to an external load; and
(c) powering the load with the cell.

14. The method of claim 13, including selecting the lithiated cathode active material from the group consisting of LiNiO₂, LiMn₂O₄, LiCoO₂, LiCo_{0,92}Sn_{0,08}O₂, LiCo₁₋ₓNiₓO₂ and mixtures thereof.

15. The method of claim 13 or claim 14, including powering an implantable medical device as the external load.

16. The method of any of claims 13 to 15, including powering the external load with a current of from 100 mA (milliamperes) to 4 A (amps) delivered from the cell.

17. The method of any of claims 13 to 16, including providing lithium cobalt oxide as the cathode active material and the cell having a cathode capacity of from 165 mAh/g to 245 mAh/g at a rate of C/50, or including providing lithium cobalt oxide as the cathode active material and the cell having a cathode capacity of from 165 mAh/g to 225 mAh/g at a rate of C/5.
